# EUROPEAN PATENT APPLICATION

(11) **EP 1 156 537 A2**
(43) Date of publication of application: **21.11.2001**
(21) Application number: 01106604.0
(22) Date of filing: 15.03.2001
(51) Int. Cl.: H01M 2/10, H01M 10/50

(54) **Battery structure for electric vehicle and battery module**

(30) Priority: 19.05.2000 JP 2000147179
(71) Applicant: SHIN-KOBE ELECTRIC MACHINERY CO. LTD, Tokyo 103-0023 (JP)
(72) Inventor: Goto, Takeyuki, Osato-gun, Saitama 369-0201 (JP); Aiba, Tsunemi, Kiryu-shi, Gunma 376-0041 (JP); Onuki, Toshiaka, Fukaya-shi, Saitama 366-0818 (JP)
(74) Representative: Viering, Jentschura & Partner

(57) **Abstract**

The present invention provides a battery structure for an electric vehicle which has an excellent cooling performance, which can fix battery cells securely, and which can improve work efficiency in assembling. A battery module 1 is provided with a battery case main body comprising an upper cover 4, a middle cover 5 and a lower cover 6, and two side covers covering exposed side surfaces of battery cells held in the battery case main body in a horizontal state. The upper cover 4 and the lower cover 6 are respectively formed with discharging side ventilating holes 14a and introducing side ventilating holes 14b which allow cooling air to flow upwardly and total aperture area of the discharging side ventilating holes 14a is set to 1/2 of total aperture area of the introducing side ventilating holes 14b. A plurality of holding ribs which divide the interior of the battery case into a plurality of partition rooms to hold the battery cells in a horizontal state are formed on the upper cover 4, the middle cover 5 and the upper cover 6. Cooling air is supplied from the lower cover 6 side to the upper cover 4 side.

## Description

This patent application is based on a Japanese patent application, serial number 2000-147179, entitled "Battery Structure for Electric vehicle and Battery Module" of Goto et al., filed on May 19, 2000.

### FIELD OF THE INVENTION

The present invention relates to a battery structure for an electric vehicle and a battery module, and in particular relates to a battery structure for an electric vehicle where a plurality of pillar shaped battery cells are accommodated in a battery case and the battery cells are electrically connected, and a battery module provided with the battery structure for an electric vehicle.

### DESCRIPTION OF THE RELATED ART

In a battery module for an electric vehicle, a plurality of high performance and high capacity battery cells containing lithium oxide or the like as a main constituting material are used. As such a battery cell, such a pillar structure is generally employed that both a positive electrode and a negative electrode are each formed in a strip where active material is applied on a metal foil, and the positive electrode and the negative electrode are wound or rolled spirally in a sectional configuration through a separator so as not to come in contact with each other. In the battery cell for an electric vehicle, since its calorific value is relatively high at a charging/discharging time and its battery performance depends on a temperature, it is required to enhance a cooling performance in order to secure a predetermined performance of the battery cell.

In order to enhance the cooling performance of the battery cell, for example, in Japanese Patent Application Laid-Open (JP-A) No. 7-47892, there has been disclosed a technique that a battery cell is formed in a pillar shape, the battery cell is sandwiched from the top and the bottom thereof between two plates formed of material having a high heat conductivity, and it is fixed to a vehicle body by the plates so that a ventilating paths are formed between the upper and lower plates. According to this technique, since air can flow through the ventilating path between a hollow portion of the battery and the plates, the battery cell can be cooled.

In the above publication, however, there is a problem that, since the ventilating path is formed between the upper and lower plates, the ventilating path is narrow so that the ventilating path is easily filled with heat, and when the battery cells are arranged before and behind, unevenness in cooling occurs in the respective battery cells.

Also, as the battery cells are easy to move in an axial direction between the upper and lower plates, the battery cells are sandwiched via a buffer material (vibration isolating material) between the plates in order to prevent such movement. Therefore, there occurs a problem that the ventilating path becomes further narrow, thereby resulting in deterioration of the cooling performance. Further, since the battery cells are fixed through the buffer material, work efficiency in assembling is deteriorated and handling of the battery cells becomes difficult.

### SUMMARY OF THE INVENTION

In view of the above problems, an object of the present invention is to provide a battery structure for an electric vehicle whose cooling performance is improved, where battery cells can be fixed securely, and where work efficiency in assembling can be improved, and a battery module provided with the battery structure.

In order to achieve the above problem, there is provided with a battery structure for an electric vehicle where a plurality of pillar shaped battery cells are accommodated in a battery case and the battery cells are electrically connected, comprising: an upper covering member, having a plurality of holding ribs for dividing the battery case into a plurality of partition rooms in a longitudinal direction and for holding the battery cells in a horizontal state, and in which a plurality of ventilating holes for discharging cooling air from the battery case are formed; a middle covering member, having a plurality of holding ribs for dividing the battery case into a plurality of partition rooms in a longitudinal direction and for holding the battery cells in a horizontal state; a lower covering member, having a plurality of holding ribs for dividing the battery case into a plurality of partition rooms in a longitudinal direction and for holding the battery cells in a horizontal state, and in which a plurality of ventilating holes, whose total aperture area is larger than a total aperture area of the ventilating holes formed in the upper covering member, for introducing the cooling air into the battery case are formed; and two side covering members for covering exposed side surfaces of the battery cells which are held in the horizontal state.

In the present invention, since the plurality of pillar shaped battery cells are held from the tops and bottoms thereof in a horizontal state by the plurality of holding ribs within the battery case, the battery cells can be arranged in order without floating thereof, so that the supporting stability of the battery cells can be improved. Also, since cooling air flows upwardly or downwardly along side surfaces of the battery cells through ventilating holes formed the upper covering member and the lower covering member constituting the upper and the lower wall faces of the battery case in the respective partition rooms divided in a plural manner in a longitudinal direction of the battery case by the holding ribs, cooling air can be distributed to the respective battery cells individually within the battery case so that cooling of the individual battery cells can be performed over the total length of the battery cells in an excellent manner and cooling performance of the whole battery module can be improved. Further, the total opening area of the plurality of ventilating holes formed on the lower wall face which is positioned at the introduction side of cooling air is larger that that of the plurality of ventilating holes formed on the upper wall face which is positioned at the discharge side of cooling air, more cooling air can be introduced into the ventilating holes at the introduction side. In addition, since the total opening area on the discharge side is small so that flow rate of cooling air is increased at the discharge side, cooling effect on the battery cells disposed at the discharge side can be increased. Also, since the battery case is provided on its inside with the holding ribs dividing the battery case in the plurality of partition rooms along the longitudinal direction thereof, the rigidity, in the transverse direction (direction crossing the longitudinal direction), of the battery case itself can be increased. Further, since the battery cells themselves function as a beam for increasing the rigidity of the battery case due to that the rigidity of the battery is high, the rigidity, in the longitudinal direction, of the battery case can also be increased. Furthermore, the holding ribs for holding the battery cells are configured on the upper covering member, the middle covering member and the lower covering member in a divided manner, arranging work of the battery cells and assembling work can be simultaneously performed so that the work efficiency in assembling the battery module can be improved. Moreover, since the two side covering members covering exposed side surfaces of the battery cells which are held in the horizontal state are provided as separate members, electrical connecting work efficiency among the battery cells can be improved at the exposed side surfaces.

### BRIEF DESCRIPTION OF THE DRAWINGS

Fig. 1 is a perspective view of a battery module of an embodiment to which the present invention is applicable;
Fig. 2 is a perspective view of a battery cell used in the battery module of the embodiment;
Fig. 3 is an exploded perspective view of a battery case main body used in the battery module of the embodiment;
Fig. 4 is a perspective view of a lower cover on which a battery cell is arranged;
Fig. 5 is a perspective view of the battery case main body showing a state where cell-cell bus bars are mounted;
Fig. 6 is a sectional view of the battery module of the embodiment;
Fig. 7 is a perspective view of the battery case main body and a side cover B before the former is attached with the latter;
Fig. 8 is a perspective view of the battery case main body to which a side cover A is attached and the side cover A;
Fig.9 is a perspective view showing a state where parts to be assembled to the side cover A have been assembled to the side cover A;
Fig. 10 is a perspective view showing a state of the battery case main body before a cell control unit cover is fixed; and
Fig. 11 is a perspective view showing a state of the battery case main body before a fuse cover is fixed.

### DETAILED DESCRIPTION OF THE PREFERRED EMBODIMENTS

An embodiment of a battery module for an electric vehicle according to the present invention will be explained below with reference to the drawings.

### (Structure)

First, a structure of the battery module of the present embodiment will be explained.

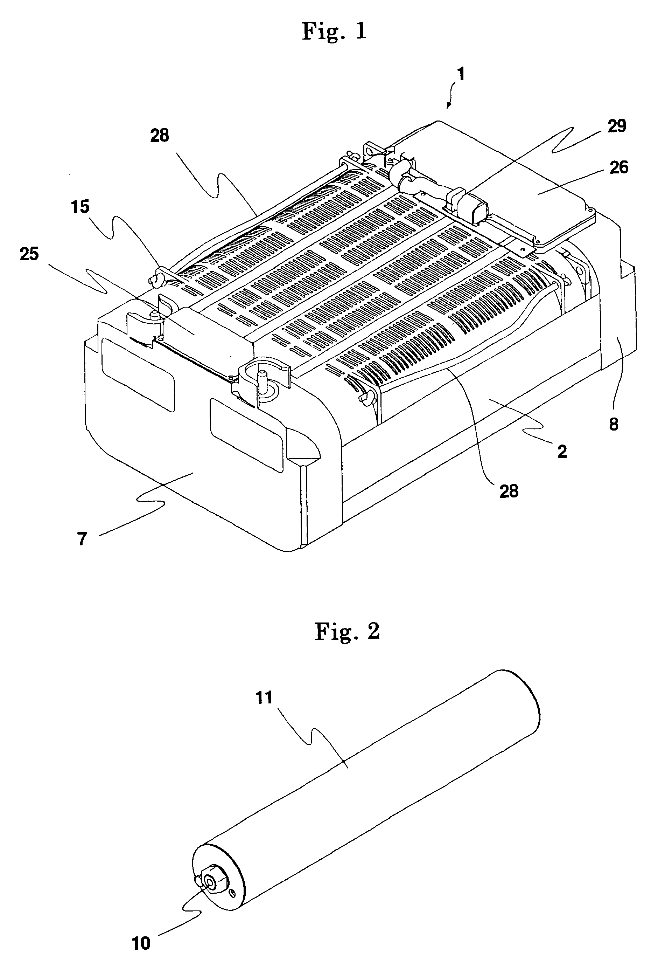

As shown in Fig. 1, a battery module 1 of the present embodiment is provided with an electrically insulating battery case 2 formed in a box shape and comprising 5 resin-molded parts. Hanging hooks 15 formed in an almost triangular shape are provided on an upper portion of the battery case 2 (an upper cover 4 which is described later) in a projecting manner in a direction crossing the longitudinal direction (hereinafter referred to as a transverse or widthwise direction) of the battery case 2. A through hole is formed in each hanging hook 15, and each end of a hanging string 28 is tied to each hanging hook 15 such that the string 28 extends along the longitudinal direction. For this reason, the battery module 1 can be moved or carried by grasping the hanging strings 28.

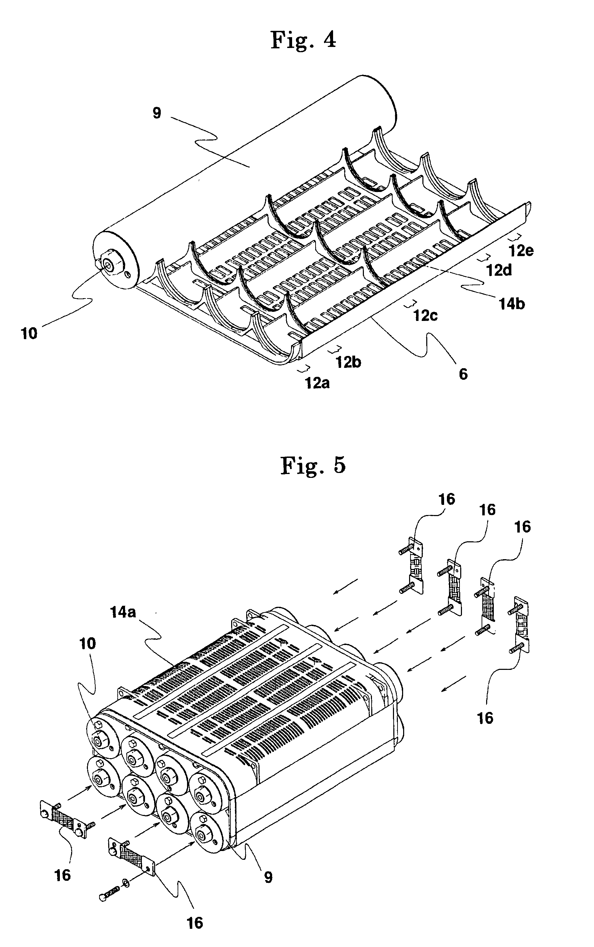

High performance battery cells 9, each containing lithium manganese oxide as a main constituent material and covered with a case with a high heat conductivity, are disposed in the battery case 2 and they are electrically connected in series (refer to Fig. 5). As shown in Fig. 2, the battery cell 9 is formed in a pillar shape in order to increase the pressure tightness at a time of heat-generation expansion, and it is provided at both side end portions with a terminal 10 in which a screw hole is formed. Also, an outer peripheral surface of the battery cell 9 is covered with an outer tube 11 made of resin material and having electrical insulation and heat shrinkable property.

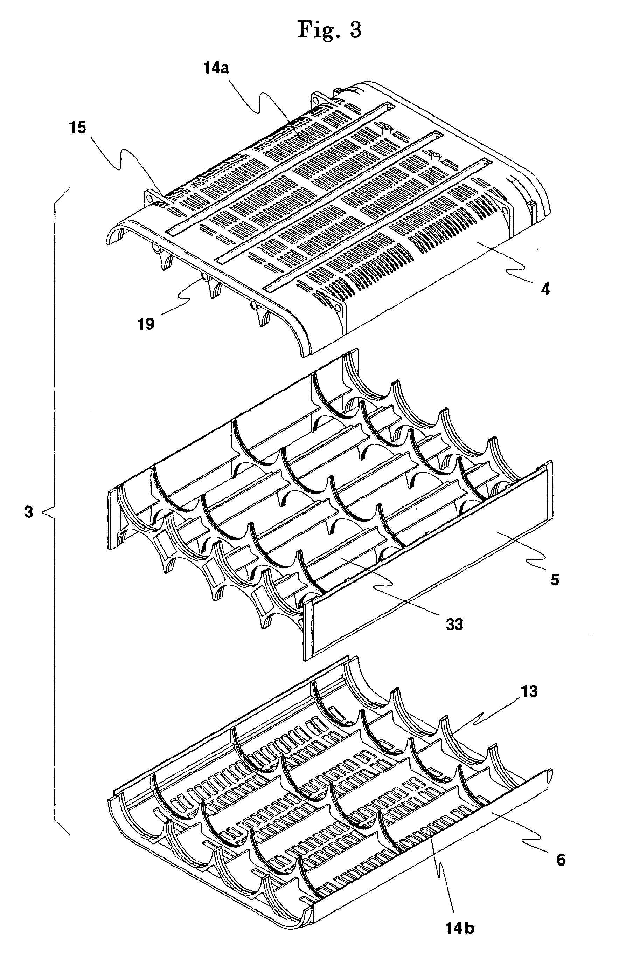

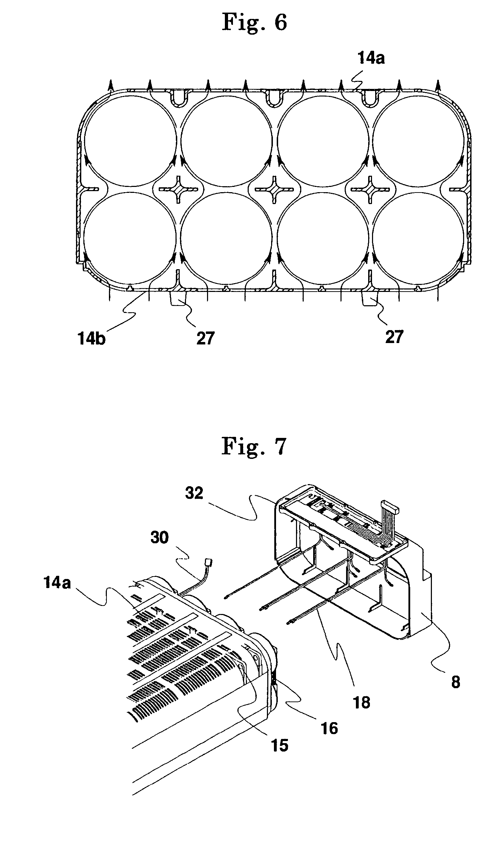

The battery case 2 comprises a battery case main body 3 which is divided into an upper cover 4 serving as an upper covering member, a middle cover 5 serving as a middle covering member, and a lower cover 6 serving as a lower covering member, as shown in Fig. 3, and a side cover A7 and a side cover B8 which are fitted to both side end portions of the battery case 3, as shown in Fig. 1. The battery case main body 3 has a structure that the total 8 battery cells 9 are arranged or accommodated in 4 rows along a horizontal direction and in 2 rows along a vertical direction within the battery case main body 3, and these battery cells 9 are held or sandwiched along a vertical direction by the upper cover 4, the middle cover 5 and the lower cover 6 (See Fig. 5). Incidentally, each of joining end faces of the upper cover 4, the middle cover 5 and the lower cover 6 has a straight scarf joint structure (See Fig. 6).

As shown in Figs. 3 and 4, formed integrally on each of the upper cover 4, the middle cover 5 and the lower cover 6 constituting the battery case main body 3 are five semi-circular rib portions 12 of a first rib 12a, a second rib 12b, a third rib 12c, a fourth rib 12d and a fifth rib 12e. The first rib 12a and the fifth rib 12e are formed at positions where both end portions of electrode groups of the battery cells 9 are held, and the widths thereof are wider than those of the other semi-circular ribs. The second rib 12b and the fourth rib 12d are formed at positions corresponding to the hanging hooks 15 provided on an outer surface of the upper cover 4 in the projecting manner, and the third rib 12c is formed at a position corresponding to just a center, in a longitudinal direction, of the battery cell 9. A filling groove 13 serving as a groove portion where adhesive is filled for fixing the battery cell 9 is formed at a center, in a circumferential direction, of a battery cell holding end surface of the semi-circular rib portion 12.

Further, many rectangular shaped introduction side ventilating holes 14b which serve as introducing side openings of cooling air for cooling the battery cells 9 are formed in the lower cover 6 so as to avoid the positions where the semi-circular rib portions 12 are formed. In the middle cover 5, three cross-shaped ribs 33 serving as reinforcing or strengthening ribs with a cross-shaped sectional configuration which strengthen the five semi-circular rib portions 12 to maintain the positions of the first rib 12a, the second rib 12b, the third rib 12c, the fourth rib 12d and the fifth rib 12e in the above predetermined positions are formed so as to penetrate the second rib 12b, the third rib 12c and the fourth rib 12d to extend between the first rib 12a and the fifth rib 12e. These three cross-shaped ribs 33 are arranged at equal intervals in a horizontal direction. In the upper cover 4, many narrow discharging side ventilating holes 14a which serve as discharging side openings of cooling air are formed so as to avoid the positions where the semi-circular rib portions 12 are formed, like the lower cover 6. The aperture area of the discharging side ventilating holes 14a is smaller than that of the introducing side ventilating holes 14b, and the number of the discharging side ventilating holes 14a is more than that of the introducing side ventilating holes 14b. Also, the total aperture area of the discharging side ventilating holes 14a formed in the upper cover 4 is set to 1/2 of the total aperture area of the introducing side ventilating holes 14b formed in the lower cover 6.

Furthermore, as shown in Fig. 3, three tunnels 19 serving as a tunnel part for accommodating voltage detecting leads (described later) which penetrates through the upper cover 4 in a longitudinal direction are formed in the upper cover 4. Also, foot portions 27 with a truncated cone shape are formed in a projecting manner on four portions of a bottom portion of the lower cover 6.

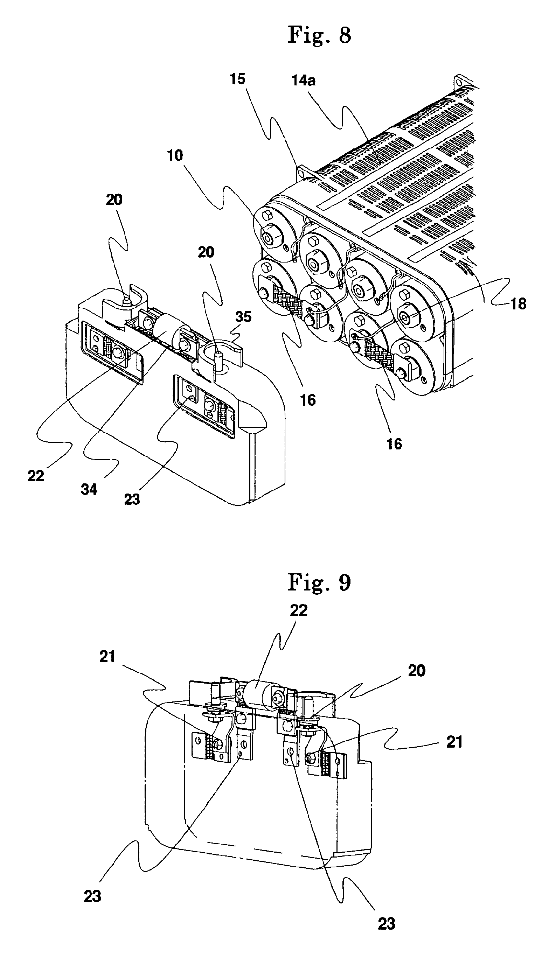

Figs. 1, 8 and 9, terminal posts 20 whose side surfaces are covered with contact preventing covers 35 serving as an insulating member with a U-shaped sectional configuration and which respectively serve as positive and negative electrode outer output terminals are formed on an upper portion of the side cover A7. These terminal posts 20 are supported by post-cell connecting metal fittings 21 fixed to the side cover A7. The terminal post 20 positioned on the side of the positive electrode is electrically connected to the battery cell 9 of the highest electric potential side through a fuse 22. The fuse 22 has a cylindrical shape, it is fixed at its both ends to fuse-cell connecting metal fittings 23 fixed to the side cover A7 by screws, and it is held by a plurality of arc-shaped fuse holding ribs 34 with a bottom portion formed integrally with the side cover A7 provided from an upper portion of the side cover A7 in a projecting manner. Also, the fuse 22 is covered with a fuse cover 25 via a fuse water-proof packing 24 in order to secure the safety and water-proof property. A plurality of fuse holding ribs (not shown), each having the same shape as the fuse holding rib 34 provided in a projecting manner on the side cover A7 and being symmetrical to the fuse holding rib 34, are formed inside the fuse cover 25 integrally therewith towards the fuse 22. For this reason, the fuse 22 is held and fixed in a vertical state by the fuse holding ribs 34 provided in the projecting manner on the side cover A7 and the fuse holding ribs (not shown) provided in the projecting manner on the fuse cover 25. Incidentally, two working holes for improving connecting work efficiency of the post-cell connecting metal fittings 21 by threading bus bar screws into screw holes formed in the battery cells 9 of the highest electric potential side and the lowest electric potential (ground) side are formed on the side cover A7.

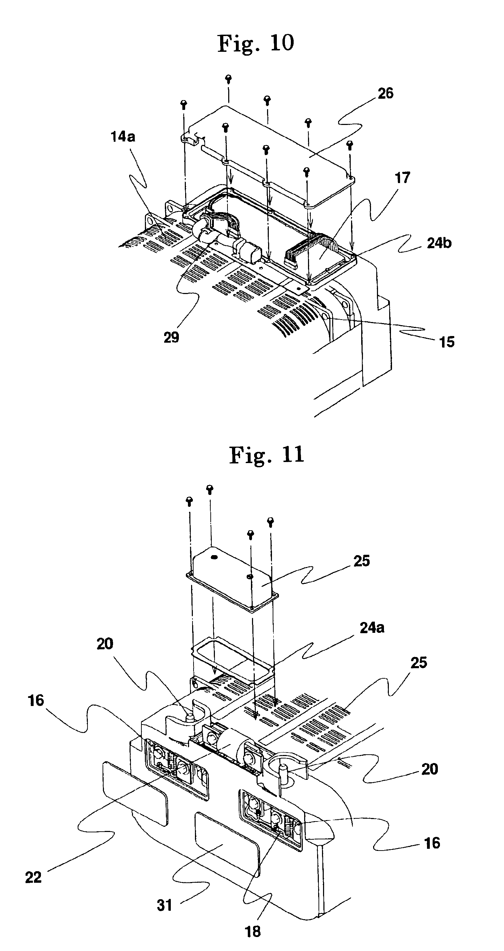

As shown in Fig. 7, a cell control unit accommodating portion 32 serving as an accommodating portion for accommodating a cell control unit 17 (refer to Fig. 10) which detects the voltages of the respective battery cells 9 to adjust and control the voltages so as to achieve an even voltage among the battery cells and which monitors the temperatures of the battery cells 9 is provided on an upper portion of the side cover B8 in a projecting manner. A plurality of unit supporting ribs (not shown) which support the cell control unit 17 from the bottom thereof are provided vertically in the cell control unit accommodating portion 32. Voltage detecting leads 18 serving as lead wires for detecting voltages across both ends of the respective battery cells 9 and a thermistor connector 30 whose distal end has a thermistor in order to detect the temperature of the specified battery cell 9 are connected to the cell control unit 17 as lead wires for internal wiring.

As shown in Figs. 1 and 7, the cell control unit accommodating portion 32 extends outwardly from the upper portion of the side cover B8 to ride on the upper portion of the upper cover 4 and it is covered with a cell control unit cover 26. A plurality of unit supporting ribs (not shown) which support the cell control unit 17 from the top thereof are provided in a projecting manner inside the cell control unit cover 26 integrally therewith. Accordingly, the cell control unit 17 are held and fixed from the top and bottom thereof by the respective unit supporting ribs of the cell control unit accommodating portion 32 and the cell control unit cover 26. Also, a communication harness 29 which collectively includes communication lines for performing communication with a control portion of an electric vehicle are derived from the cell control unit accommodating portion 32 and it is fixed on an upper portion of the upper cover 4.

### (Assembling)

Next, the assembling procedure of the battery module 1 of the embodiment will be explained.

As shown in Figs. 3 and 4, in the battery case main body 3, the battery cells 9 are arranged horizontally in four rows such that the outer peripheries thereof are caused to abut on the semi-circular rib portions 12a to 12e formed integrally on the lower cover 6 which is the lowermost layer, then the middle cover 5 which has the semi-circular rib portions 12a to 12e for holding the battery cells 9, which correspond to the semi-circular rib portions 12a to 12e of the lower cover 6 is stacked on the battery cells 9, the battery cells 9 are arranged horizontally in four rows like in the same manner as the above, and the upper cover 4 is stacked on the battery cells 9 such that the semi-circular rib portions 12a to 12e formed integrally with the upper cover 4 abut on outer peripheries of the battery cells 9, so that these stacked members and cells are pressurized from the upper cover 4 and the lower cover 6 and the battery cells 9 are fixed. Incidentally, the filling groove 13 formed on the battery cell holding end face of each semi-circular rib portion 12 is filled with polyurethane system adhesive before the battery cells 9 are arranged on the semi-circular rib portion 12.

Next, as shown in Fig. 5, the respective battery cells 9 are connected in series by inserting the bus bar screws to screw holes formed on both ends of conductive inter-cell, or cell-cell, bus bars 16 via flat washers to thread the bus bar screws to screw holes formed in the terminals 10 of the battery cells 9.

Next, as shown in Figs. 7 to 9, the side cover A7 where the terminal posts 20, the post-cell connecting metal fittings 21, the fuse 22, and the fuse-cell connecting metal fittings 23 have been assembled in advance, and the side cover B8 where the cell control unit 17 has been assembled in the cell control unit accommodating portion 32 in advance are fitted and fixed to the battery case main body 3. Prior to fitting and fixing of these side covers A7 and B8, the voltage detecting leads 18 derived from the cell control unit accommodating portion 32 are the cell-cell bus bars 16 and the thermistor connector 30 is connected to the cell control unit accommodating portion 32 on the side of the side cover B8, and connection between the terminals of the battery cells 9 of the highest electric potential side and the lowest electric potential side is performed by threading the bus bar screws to the terminals on the side of the side cover A7. Incidentally, for connecting the voltage detecting leads 18 to the cell-cell bus bars 16 on the side of the side cover A7, the voltage detecting leads 18 are caused to pass through the tunnels 19 from the side of the side cover B8 to the side of the side cover A7.

As shown in Figs. 10 and 11, after the connector connection is performed in the cell control unit accommodating portion 32, the fuse 22 and the cell control unit 17 are respectively covered with the fuse cover 25 via the fuse water-proof packing 24a and with the cell control unit cover 26 via the cell control unit water-proof packing 24, and these covers are fixed by screws. Next, the external communication harness 29 is fixed on the upper cover 4 by screws and trimming covers 31 are fixed to the two working apertures of the side cover A7 so that the battery module 1 is assembled.

### (Operation and the like)

Next, operation and the like of the battery module 1 of this embodiment will be explained.

In the battery module 1 of the present embodiment, the battery cells 9 are arranged within the battery case 2 in a horizontal state and the battery cells 9 are held by the plurality of semi-circular rib portions 12. In addition, the battery cells 9 are fixed to the holding end faces of the semi-circular rib portions 12 through the adhesives filled in the filling grooves 13 on the holding end faces. Accordingly, the battery cells 9 mounted on a vehicle to be applied with vibrations can be fixed within the battery case 2 in order without floating them. For this reason, an excellent supporting stability of the battery cells 9 can be obtained in the battery case 2. Also, since the filling grooves 13 are formed at the middle portions in the circumferential directions of the semi-circular rib portions 12, overflowing of the adhesive in the semi-circular rib portions 12 is reduced.

Also, as shown in Fig. 6, the respective partition rooms defined by the semi-circular rib portions 12 in the longitudinal direction of the battery cell 9 are structured such that cooling air flows upwardly from many introducing side ventilating holes 14b toward the discharging side ventilating holes 14a along side surfaces of the battery cells 9. Accordingly, cooling air can be distributed approximately uniformly to the individual battery cells 9 over the entire lengths thereof so that the individual battery cells 9 can be cooled in an excellent manner. Thus, in the battery module 1, since cooling performance for cooling all the battery cells can be improved, the original specification performance owned by the battery module 1 can be developed, and the life of the battery cells 9 is prevented from being reduced even when, as a main constituting material, a lithium ion secondary battery containing lithium manganese oxide, whose life is considered to be reduced in a high temperature environment of 50° C or so, is used. For this reason, the battery module 1 of the present embodiment is suitable for a power supply source for an electric vehicle.

Also, the total aperture area of the introducing side ventilating holes 14b formed in the lower cover 6 positioned on the introducing side of cooling air is twice fold in comparison with that of the discharging side ventilating holes 14a formed in the upper cover 4 positioned on the discharging side of cooling air, the aperture are of the discharging side ventilating hole 14a is made smaller than that of the introducing side ventilating hole 14b, and the number of the discharging side ventilating holes 14a is less than that of the introducing side ventilating hole 14b. For this reason, since more cooling air can be introduced from the introducing side and the total aperture area of the discharging side ventilating holes 14a is made 1/2 of that of the introducing side ventilating holes 14b so that a flow path for cooling air is narrowed, the flow rate of cooling air on the discharging side is increased. In the present embodiment, since the temperature of the cooling air is increased due to head radiation of the battery cells held between the lower cover 6 and the middle cover 5, the flow rate of the cooling air on the discharging side is increased so that the temperature of the battery cells 9 held between the middle cover 5 and the upper cover 4 is substantially equal to the temperature of the battery cells 9 held between the lower cover 6 and the middle cover 5, thereby removing cooling unevenness among the battery cells 9. This utilizes the fact that, when the flow rate of cooling air is increased, cooling effect is increased in proportion to the square root of the flow rate. Also, since the number of the discharging side ventilating holes 14a formed in the upper cover 4 is more than that of the introducing side ventilating holes 14b formed in the lower cover 6, the discharging of cooling air can be performed uniformly so that the cooling effect of the battery cells 9 arranged on the discharging side can further be increased. Further, since the adhesive is filled in the filling grooves 13 and sealing is performed between the outer peripheral portions of the battery cells 9 and the semi-circular rib portions 12, cooling air leakage between adjacent partition rooms is prevented so that the cooling effect of the battery cells 9 can be increased further.

Further, the battery case 2 is provided inside with the semi-circular rib portions 12 partitioning the interior thereof to a plurality of partition rooms along the longitudinal direction of the battery cell 9. For this reason, the rigidity, in the horizontal direction, of the battery case 2 itself can be increased and the cell cases of the battery cells 9 arranged in the battery case 2 increase the rigidity, in the longitudinal direction, of the battery case 2. That is, the rigidity of each battery cell 9 is high, the battery cell 9 itself functions as a beam for increasing the rigidity of the battery case 2. Also, since the electrode group is the heaviest in the battery cell 9, portions of the battery cell 9 which correspond to both end portions of the electrode group are supported by the first rib 12a and the fifth rib 12e which are wider than other ribs, the second rib 12a and the fourth rib 12d are arranged at portions of the battery cell 9 which correspond to the hanging hooks 15, and the third rib 12c is arranged at the center, in the longitudinal direction, of the battery cell 9, the rigidity of the battery case 2 is increased by these semi-circular rib portions 12. Further, since the middle cover 5 has three cross-shaped ribs 33, the semi-circular rib portions 12 of the middle cover 5 are reinforced or strengthened, so that the positions of these semi-circular rib portions 12 can be maintained so as to correspond to the positions of the rib portions 12 of the upper cover 4 and the lower cover 6. As shown in Fig. 6, since the cross-shaped rib 33 guides cooling air to the side of the battery cells 9, cooling effect on the battery cells 9 can further be increased.

Also, since the battery case main body 3 is divided to the upper cover 4, the middle cover 5 and the lower cover 6, arranging work of the battery cells 9 and the assembling work of the battery case main body 3 can be performed simultaneously, so that work efficiency in assembling the battery module 1 can be improved. Further, since the terminal portions of the respective battery cells 9 are exposed from the battery case main body 3 in a state where the side cover A7 and the side cover B8 are not fitted and fixed to the battery case main body 3, as shown in Fig. 5, electrical connecting work between the battery cells 9 can be performed easily by using the cell-cell bus bars 16.

Moreover, as shown in Fig. 7, since the voltage detecting leads 18 conducting the voltages of the respective battery cells 9 to the cell control unit 17 are arranged and fixed to the side cover B8 in advance, and the voltage detecting leads 18 are wired and accommodated in the tunnels 19 which penetrate through the upper cover 4 in the longitudinal direction thereof, the lead wires or the like are not exposed outside from the battery case 2. In a case that the voltage detecting leads 18 are exposed outside, the number of parts is increased because a relay through a water-proof connector or the like is required and the work becomes complicated because an airtight structure or mechanism becomes indispensable at a portion of the battery case 2 where the lead wires are drawn out. In the present embodiment, since it becomes possible to wire the voltage detecting leads 18 while maintaining a airtight state, a water-proof (relay) connector or the like is not required and the work can be made simple. Further, since the voltage detecting leads 18 are not exposed outside, they are prevented from being damaged.

Further, in the present embodiment, as shown in Fig. 5, the battery cells 9 are held in a horizontal state by the upper cover 4, the middle cover 5 and the lower cover 6 and their side surfaces are exposed in a state where the side covers A7 and B8 are not attached to the battery case main body 3, and the battery cells are electrically connected by the cell-cell connecting bus bars 16. Accordingly, since connecting work can be performed in a state where the side surfaces of the battery cells 9 are exposed before the side covers A7 and B8 are mounted to the main body 3, connection between the battery cells 9 can be made easily.

In the present embodiment, the fuse holding ribs 34 for holding the fuse 22 are provided on the side cover A7 integrally therewith, and the fuse 22 is held and fixed by the fuse holding ribs 34 and the fuse cover 25 with the fuse holding ribs having the same shape as that of the fuse holding rib 34. For this reason, since the mounting work can be preformed previously by placing the fuse 22 on the side cover A7, work efficiency in assembling the battery module 1 can be improved. Also, since the fuse 22 is merely placed on the upper portion of the side cover A7 and it is covered with the fuse cover 25, replacement work of fuses 22 can be performed easily from the outside of the battery case 2. Further, since the terminal posts 20, the post-cell connecting metal fittings 21, the fuse 22, and the fuse-cell connecting metal fittings 23 can be assembled to the side cover A7 in advance, the assembling work of the battery module 1 can be improved.

In the present embodiment, the cell control unit 17 is held and fixed by the unit supporting ribs of the cell control unit accommodating portion 32 and the cell control unit cover 26 from the top portion and the bottom portion thereof. Since such a structure is employed that the cell control unit accommodating portion 32 and the side cover B8 are formed integrally with each other and the cell control unit 17 is held and fixed from the top and bottom thereof by the unit supporting ribs, a structure for fixing the cell control unit 17 is not required so that the work efficiency at an assembling time can be improved. Also, since the cell control unit 17 is covered with the cell control unit cover 26 and it is arranged on the top portion of the side cover B8, replacement of the cell control unit 17 can be performed easily from the outside of the battery case 2 by removing the screws for fixing the cell control unit cover 26 to the cell control unit accommodating portion 32.

Further, as shown in Fig. 6, four foot portions are provided in a projecting manner on the bottom surface portion of the lower cover 6 so that the battery case 2 is spaced from a placement surface of the battery module 1 and the former does not come in direct contact with the latter. Therefore, even when the battery case 2 is placed on the placement surface on which metal projections such as screws exist, the metal projections do not enter in the introducing side ventilating holes 14b and they do not come in contact with the battery cells 9 so that the battery module 1 is prevented from being damaged. For this reason, electrical safety of the battery cell 1 is improved. Also, the lower cover 6, the middle cover 5 and the upper cover 4 constituting the battery case main body 3 are mutually arranged smoothly utilizing the foot portions 27 as a reference point so that work efficiency can be improved.

Furthermore, in the present embodiment, since the terminal posts 20 are provided vertically at positions striding over the fuse 22 so that a sufficient distance is secured and the respective terminal posts 20 are covered at their side surfaces with the contact prevention covers 35, an external short-circuiting accident can be prevented from occurring between the both terminal posts so that electrical safety can be secured. Also, since the terminal posts 20 (external output terminals) are provided vertically on the upper portion of one side cover A7 of the side covers A7 and B8, the power supply can easily be taken out.

Moreover, in the present invention, since the cell control unit accommodating portion 32 is structured so as to ride on the upper cover 4, a large space can be secured for arranging the cell control unit 17 and collecting lead wires such as the voltage detecting leads 18 connected to the cell control unit 17 so that work efficiency in assembling such as collecting work of lead wires can be improved.

Thus, since the battery module 1 of the present invention is provided with the above-mentioned battery structure for an electric vehicle, an excellent cooling performance can be obtained and the battery cells can be fixed securely so that the work efficiency can be improved.

Incidentally, in this embodiment, the battery module 1 where the battery cells 9 are arranged in four rows in the horizontal direction and in two rows in the vertical direction has been exemplified, but the present invention is not limited to this embodiment. For example, in a case that three rows in the vertical direction are utilized, such a structure can be employed that another middle cover 5 is employed and battery cells 9 are arranged in the another meddle cover 5. Also, regarding the longitudinal direction of the battery cell, such a structure may be employed that, for example, two battery cells are connected in tandem using connecting fittings for connecting battery cells in series in a horizontal state and an exposed side surface of the battery cell is covered with a side cover.

In the present embodiment, the assembling procedure of the battery module 1 has been exemplified, but the present invention is not limited to this procedure. It will be obvious to those skilled in the art that other various battery module may be made without departing from the scope of the invention as hereinafter claimed.

## Claims

1. A battery structure for an electric vehicle where a plurality of pillar shaped battery cells are accommodated in a battery case and the battery cells are electrically connected, comprising:
an upper covering member, having a plurality of holding ribs for dividing the battery case into a plurality of partition rooms in a longitudinal direction and for holding the battery cells in a horizontal state, and in which a plurality of ventilating holes for discharging cooling air from the battery case are formed;
a middle covering member, having a plurality of holding ribs for dividing the battery case into a plurality of partition rooms in a longitudinal direction and for holding the battery cells in a horizontal state;
a lower covering member, having a plurality of holding ribs for dividing the battery case into a plurality of partition rooms in a longitudinal direction and for holding the battery cells in a horizontal state, and in which a plurality of ventilating holes, whose total aperture area is larger than a total aperture area of the ventilating holes formed in the upper covering member, for introducing the cooling air into the battery case are formed; and
two side covering members for covering exposed side surfaces of the battery cells which are held in the horizontal state.

2. A battery structure for an electric vehicle according to claim 1, wherein an aperture area of each of the ventilating holes formed in the upper covering member is smaller than that of each of the ventilating holes formed in the lower covering member, and the number of the ventilating holes formed in the upper covering member is larger than that of the ventilating holes formed in the lower covering member.

3. A battery structure for an electric vehicle according to claim 1 or 2, wherein circular arc shaped holding end surfaces, on which groove portions are formed in a circumferential direction, for holding the battery cells, are formed in the holding ribs, and adhesives are filled up in the groove portions.

4. A battery structure for an electric vehicle according to any one of claims 1 through 3, wherein a tunnel part which penetrates through the upper covering member in a longitudinal direction and which accommodates lead wires for internal wiring is formed in the upper covering member, and the lead wires are not exposed to an exterior of the battery case.

5. A battery structure for an electric vehicle according to any one of claims 1 through 4, wherein the middle covering member has strengthening ribs in a longitudinal direction for strengthening the holding ribs of the middle covering member.

6. A battery structure for an electric vehicle according to any one of claims 1 through 5, wherein a plurality of foot portions which are provided so as to project out from a bottom face of the lower covering are formed, and the bottom face is separated from a mounting floor for the battery case.

7. A battery structure for an electric vehicle according to any one of claims 1 through 6, wherein the exposed side surfaces of the battery cells are connected with a connecting member for connecting battery cells electrically in series.

8. A battery structure for an electric vehicle according to any one of claims 1 through 7, wherein a plurality of fuse holding ribs for holding a fuse from a bottom side are formed so as to project toward the fuse on an upper portion of one of the side covering members, and the fuse is held and fixed in a vertical direction by the fuse holding ribs and a fuse cover on which a plurality of fuse holding ribs for holding the fuse from an upper side are formed so as to project inside the fuse cover.

9. A battery structure for an electric vehicle according to any one of claims 1 through 8, wherein an accommodating portion for accommodating a battery cell control unit for controlling the battery cells is disposed at an upper portion of another of the side covering members, a plurality of unit holding ribs for holding the battery cell control unit from a bottom side are formed so as to project toward the battery cell control unit, and the battery cell control unit is held and fixed in a vertical direction by the unit holding ribs and a battery cell control unit cover on which a plurality of unit holding ribs for holding the battery cell control unit from an upper side are formed so as to project inside the battery cell control unit cover.

10. A battery structure for an electric vehicle according to claim 8, wherein external output terminals are formed vertically via an insulating material so as to stride over the fuse on the upper portion of one of the side covering members.

11. A battery structure for an electric vehicle according to claim 9, wherein the accommodating portion is mounted on the upper covering unit.

12. A battery module having the battery structure for an electric vehicle according to any one of claims 1 through 11.
